(19) Europäisches Patentamt

European Patent Office

Office européen des brevets

(11) Publication number: **0 214 602 B1**

## (12) EUROPEAN PATENT SPECIFICATION

(45) Date of publication of patent specification: **22.01.92**  (51) Int. Cl.[5]: **C08F 283/00**, H01B 3/30

(21) Application number: **86112126.7**

(22) Date of filing: **02.09.86**

(54) Molding of urethane resin composition.

(30) Priority: **04.09.85 JP 196318/85**
**17.10.85 JP 232462/85**
**17.10.85 JP 232461/85**

(43) Date of publication of application:
**18.03.87 Bulletin 87/12**

(45) Publication of the grant of the patent:
**22.01.92 Bulletin 92/04**

(84) Designated Contracting States:
**AT BE CH DE FR GB IT LI SE**

(56) References cited:
**EP-A- 0 062 210      DE-C- 3 412 002**
**US-A- 3 396 210      US-A- 3 624 045**
**US-A- 3 951 657      US-A- 4 408 023**

(73) Proprietor: **SUMITOMO ELECTRIC INDUSTRIES LIMITED**
**No. 15, Kitahama 5-chome, Higashi-ku**
**Osaka-shi, Osaka 541(JP)**

(72) Inventor: **Ueno, Keiji c/o Osaka Works of**
**Sumitomo Elec.Ind.Ltd. 1-3, Shimaya 1-chome**
**Konohana-ku(JP)**
Inventor: **Uda, Ikujiro c/o Kabnto Works of**
**Sumitomo Elec.Ind.Ltd. 3-3, Satsuki-cho**
**Kanuma-shi Tochigi(JP)**

(74) Representative: **Patentanwälte Grünecker, Kinkeldey, Stockmair & Partner**
**Maximilianstrasse 58**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 214 602 B1

## Description

The present invention relates to a process for preparing a crosslinked molding of a urethane resin composition having improved resistance to hot water and heat.

Thermoplastic urethane resins have superior mechanical strength and wear resistance on account of which these resins find many uses such as for hoses, belts, coatings for electric wires, pipes, shoe soles and various other moldings. However, urethane resins have easily hydrolyzable ester urethane bonds and are not suitable for use in areas where they are exposed to moisture for a prolonged period of time or in applications where steam or hot water is used. Efforts are being made to improve the resistance of water of urethane resins by using polyols having ether bonds [e.g., poly(1,4-oxybutylene)glycol], or caprolactam-based polyols (e.g., $\epsilon$-lactone ester polymers instead of the aliphatic esters having easily hydrolyzable ester bonds. However, the inherent problem of hydrolysis still exists in urethane resins. A further problem with urethane resins is that they melt at temperatures of 180°C or higher and cannot be used in applications where they are exposed to high temperatures as 150°C or above, such as in the operation of dipping electric wires in a solder bath, without causing deformation of the resin coat.

With the rapid increase in the use of NC controlled machine tools, the field in which materials having high mechanical strength (e.g., high wear resistance) are used is expanding and the development of urethane resins having high resistance to heat and hot water has been sought.

From the view point of preventing fire and other disasters, the requirements for flame retardancy are becoming increasingly strict and there is a great need to offer a molding of a urethane resin composition, such as a coated electric wire, that is flame-retardant and exhibits superior resistance to water and heat.

One conventional method for improving the resistance to heat of high-molecular weight materials is to crosslink individual polymer molecules as is frequently practiced with polyethylenes. Crosslinking is commonly achieved by chemical crosslinking with organic peroxides, by radiation crosslinking with electron beams or gamma rays, or by water crosslinking with a reactive silane. However, chemical crosslinking and water crosslinking are unsuitable for thermoplastic urethane resins because the temperature for molding is at least 180°C, which is higher than the decomposition temperature of organic peroxides, and the addition of a reactive silane is uncontrollable.

The common technique for effecting radiation crosslinking is to add reactive polyfunctional monomers, to thereby cause accelerated crosslinking. It is generally held that a higher crosslinking efficiency is attained by polyfunctional monomers that have many functional groups and have a low molecular weight of monomers per functional group. Polyfunctional groups that are commonly employed include diacrylates such as diethylene glycol diacrylate; dimethacrylates such as ethylene glycol dimethacrylate; triacrylates such as trimethylolethane triacrylate and trimethylolpropane triacrylate; trimethacrylates such as trimethylolethane trimethacrylate and trimethylolpropane trimethacrylate; as well as triallyl cyanurate, triallyl isocyanurate, diallyl phthalate, trimethylmethacryl isocyanurate, trimethylacryl cyanurate, trimethylacryl isocyanurate and triacrylformal.

The present inventors added these polyfunctional monomers to thermoplastic urethane resins and studied their effectiveness in radiation crosslinking. To their great surprise, the urethane resin compositions having incorporated therein polyfunctional monomers other than trimethylolpropane trimethacrylate, trimethylolpropane triacrylate, and triacrylformal experienced total deformation in a thermal deformation test conducted at 180°C.

It is well known by, for example, U.S. Patent 3,624,045 that N,N'-methylene-bis-acrylamide or N,N'-hexamethylene-bis-maleimide is added as a polyfunctional monomer to a thermoplastic urethane resin, followed by effecting a radiation crosslinking. Although these polyfunctional monomers are an effective crosslinking monomer, urethane resins crosslinked with such a polyfunctional monomer are greater in terms of reduction in strength in hot water at 100°C than those crosslinked with trimethylolpropane trimethacrylate, trimethylolpropane triacrylate, or triacrylformal and, therefore, the use of such polyfunctional monomers is not suited for attaining the object of the present invention.

Several of the polyfunctional monomers tested had the following molecular weights per functional group: 112.6 for trimethylolpropane trimethacrylate (molecular weight: 338), 98.7 for trimethylolpropane triacrylate (molecular weight: 296), 83 for triacrylformal (molecular weight: 249), and 83 for each of triallyl cyanurate and triallyl isocyanurate (molecular weight: 249). In consideration of the generally held view about the relationship between the number of moles of a functional group and the degree of crosslinking, triallyl cyanurate is expected to achieve a higher degree of crosslinking than trimethylolpropane trimethacrylate added in the same amount. Accordingly, there was much reason to expect that urethane resin compositions having incorporated therein triallyl cyanurate and triallyl isocyanurate experience less deformation at 180°C than those tested after incorporation of trimethylolpropane trimethacrylate, trimethylolpropane triacrylate and

EP 0 214 602 B1

triacrylformal. Curiously enough, however, the improvement in resistance to thermal deformation which was attainable by radiation crosslinking was observed only with the urethane resin compositions having incorporated therein trimethylolpropane trimethacrylate, trimethylolpropane triacrylate, or triacrylformal.

A hot water test which was subsequently conducted at 100°C showed that the urethane resin compositions that had been radiation crosslinked suffered from a smaller decrease in tensile strength than non-crosslinked urethane resins.

US-A-3 951 657 discloses a process for the preparation of a relief printing plate wherein a monomer is polymerized by adding a free radical initiator, such as benzophenone.

US-A-3 396 210 discloses a process of preparing a polyurethane resin wherein free radical-forming compounds, such as peroxides, are used to perform polymerization.

It is the object of the present invention to provide a process for preparing a crosslinked molding of a urethane resin composition having improved resistance to hot water and heat. Said object is achieved by a process for preparing a crosslinked molding of urethane resin composition comprising a thermoplastic urethane resin having incorporated therein a polyfunctional monomer selected from the group consisting of trimethylolpropane triacrylate, trimethylolpropane trimethacrylate and triacrylformal, characterized in that crosslinking is performed by radiation.

The urethane resin composition prepared according to the present invention having trimethylolpropane trimethacrylate, trimethylolpropane triacrylate or triacrylformal incorporated therein retains high strength and elongation even if it is aged in hot water at 100°C.

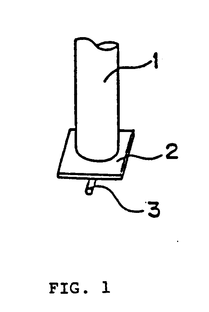

Fig. 1 is a sketch of an apparatus for conducting a thermal deformation test, wherein 1 is a metal rod (9.5 mm$^\emptyset$), 2 is a urethane resin coating layer, and 3 is a metal rod (1 mm$^\emptyset$).

In a preferable embodiment, the composition prepared according to the present invention contains 0.1 to 50 parts by weight of the polyfunctional monomer based on 100 parts by weight of the thermoplastic urethane resin. If less than 0.1 part by weight of the polyfunctional monomer is used based on 100 parts by weight of the thermoplastic urethane resin, the addition of the polyfunctional monomer is insufficient to ensure complete radiation crosslinking. If the amount of the polyfunctional monomer exceeds 50 parts by weight, the resulting composition experience a considerable drop in mechanical strength.

The dose of radiations to which the urethane resin composition is exposed varies depending on the amount of the polyfunctional monomer added and is preferably at least 3 Mrad and not more than 50 Mrad. Exposure in a dose of 3 Mrad or more is particularly effective for attaining the desired decree of crosslinking in that the composition undergoes minimal deformation in a thermal deformation test conducted at 180°C. No great drop in mechanical strength occurs if the dose of radiations is not more than 50 Mrad. The radiations which may be used as a crosslinking initiator consist of either electron beams or gamma rays.

If flame retardancy is particularly required for the urethane resin composition, it preferably contains two additional components, i.e., decabromodiphenyl ether and antimony trioxide. Decabromodiphenyl ether is the most resistant to water of all halogen compounds known today. Antimony trioxide, when combined with halogen compounds, serves to provide significantly enhanced flame retardancy.

The following examples are illustrating the present invention.

EXAMPLES 1 TO 4

A thermoplastic urethane resin (Elastollan E 385 PNAT of Nippon Elastollan Industries Ltd.) was blended by employing 180°C-hot rolls with one of the polyfunctional monomers shown in Table 1 in the amount indicated in the same table. The blend was compression molded into 1 mm-thick sheets of a test sample by applying a pressure for 10 min with a 180°C-hot press. Thereafter, the sheets were exposed to electron beams (2 MeV) in doses of 2.5, 5 and 15 Mrad. The exposed sheets were set in the apparatus shown in Fig. 1 and, while being given a load of 0.5 kg, they were subjected to preheating for 10 minutes and pressed for 10 min. The resulting deformation of each test sample was calculated by the following equation:

$$\text{Percentage of deformation} = \frac{(\text{initial thickness of the sample}) - (\text{thickness after 10-min pressurization})}{\text{initial thickness of the sample}} \times 100$$

The samples that were exposed to electron beams in a dose of 15 Mrad in Examples 1, 2 and 4 were aged for 3 or 7 days in hot water (100 °C) and subsequently tested to check for changes in tensile strength. The test samples were blanked with dumbbells (No. 3, JIS) and set in an Instron tester for testing at a tensile speed of 500 m/min. The results of the thermal deformation test and the tensile test are shown in Table 1.

COMPARATIVE EXAMPLES A TO C

Additional test sheets were prepared as in Examples 1 to 4 in accordance with the formulations shown in Table 1. Apart from those prepared in Comparative Example C, the sheets were exposed to electron beams (2 MeV) in doses of 2.5, 5 and 15 Mrad. A thermal deformation test and a hot water aging test were subsequently conducted as in Examples 1 to 4, except that the only sheets that were given an exposure in a dose of 15 Mrad were subjected to the hot water aging test.

EXAMPLES 5 TO 7

A thermoplastic urethane resin (Elastollan E385 PNAT of Nippon Elastollan Industries Ltd.) was blended by employing 180 °C-hot rolls with one of the polyfunctional monomers shown in Table 1, plus a flame retardant (decabromodiphenyl ether, DBDP) and antimony trioxide in the amounts also indicated in Table 1. Each of the blends was compression molded into 1 mm-thick sheets of a test sample by applying a pressure for 10 min with a 180 °C-hot press as in Examples 1 to 4. Thereafter, the sheets were exposed to electron beams (2 MeV) in doses of 2.5 and 15 Mrad.

The percentage of deformation and the change in tensile strength were measured for each sample by the same methods as employed in Examples 1 to 4. The results are shown in Table 2. The flame retardancy of each test sample was evaluated by determining its oxygen index (JIS K 7201). The results are also shown in Table 2.

COMPARATIVE EXAMPLES D TO F

A thermoplastic flame-retardant resin (Elastollan E585 FUOO, the trade name of Nippon Elastollan Industries Ltd. for a caprolactam-based polyurethane) was blended by employing 180 °C-hot rolls with one or more of the components shown in Table 2 in the amounts also indicated in the same table. The blend was compression molded into 1 mm-thick sheets of a test sample by applying a pressure for 10 min with a 180 °C-hot press. Thereafter, the sheets were exposed to electron beams (2 MeV) in doses of 2.5 and 15 Mrad. A thermal deformation test, measurements of oxygen index and a hot water aging test were conducted as in Examples 5 to 7. The results are shown in Table 2. The samples prepared in Comparative Examples D and E became too brittle in 7 days of aging in the hot water test to be subjected to a tensile test. The sheets prepared in Comparative Example F were not capable of being crosslinked.

EXAMPLES 8 TO 10

Each of the urethane resin compositions having the formulations indicated for Examples 5, 6 and 7 in Table 2 was extruded for an outer diameter of 7 mm over a strand (2.5 mm$^\varnothing$) of three polyethylene resin-coated conductors, and exposed to electron beams (2 MeV) in doses of 2.5 or 15 Mrad.

Each of the urethane resin coats was subjected to a horizontal burning test in accordance with the JASO specifications. The results are shown in Table 3.

COMPARATIVE EXAMPLES G TO I

Urethane resin-coated electric wires were fabricated as in Examples 8 to 10 using the urethane resin compositions having the formulations indicated for Comparative Examples D to F in Table 2. After being given an exposure to electron beams (2 MeV) in a dose of 2.5 or 15 Mrad, the urethane resin coats were subjected to a horizontal burning test as in Examples 8 to 10. The results are also shown in Table 3.

## TABLE 1

|  | Example | | | | Comparative Example | | |
|---|---|---|---|---|---|---|---|
|  | 1 | 2 | 3 | 4 | A | B | C |
| Urethane Resin (parts) | 100 | 100 | 100 | 100 | 100 | 100 | 100 |
| 1) TAF (parts) | 5 | | | | | | |
| 2) TMPTM (parts) | | 5 | 10 | | | | |
| 3) TMPTA (parts) | | | | 5 | | | |
| 4) TAIC (parts) | | | | | 5 | | |
| 5) TAC (parts) | | | | | | 5 | |
| Heat Deformation (%) | | | | | | | |
| unirradiated | 100 | 100 | 100 | 100 | 100 | 100 | 100 |
| 2.5 Mrad | 100 | 100 | 100 | 100 | 100 | 100 | – |
| 5.0 Mrad | 76.6 | 70.4 | 62.4 | 65.7 | 100 | 100 | – |
| 15.0 Mrad | 69.3 | 50.0 | 34.3 | 53.7 | 100 | 100 | – |
| Change in Strength (%) during immersion in hot water (100°C) | | | | | | | |
| initial | 100 | 100 | 100 | 100 | 100 | 100 | 100 |
| 3 days | 96.1 | 81.2 | – | 75.3 | 51.2 | 46.4 | 41.1 |
| 7 days | 96.7 | 76.4 | – | 67.2 | 54.0 | 45.9 | 34.7 |

1) TAF:    triacrylformal
2) TMPTM:  trimethylolpropane trimethacrylate
3) TMPTA:  trimethylolpropane triacrylate
4) TAIC:   triallyl isocyanurate
5) TAC:    triallyl cyanurate

TABLE 2

| | Example | | | Comparative Example | | |
|---|---|---|---|---|---|---|
| | 5 | 6 | 7 | D | E | F |
| Urethane Resin (non-flame-retardant) (parts) | 100 | 100 | 100 | | | 100 |
| Urethane Resin (flame-retardant) (parts) | | | | 100 | 100 | |
| 1) TAF (parts) | 5 | | | 5 | | |
| 2) TMPTM (parts) | | 5 | | | 5 | |
| 3) TMPTA (parts) | | | 5 | | | |
| 4) TAIC (parts) | | | | | | 5 |
| 5) DBDP (parts) | 30 | 30 | 30 | | | 30 |
| Antimony Trioxide (parts) | 10 | 10 | 10 | | | 10 |
| Heat Deformation (%) | | | | | | |
| unirradiated | 100 | 100 | 100 | 100 | 100 | 100 |
| 2.5 Mrad | 100 | 100 | 100 | 100 | 100 | 100 |
| 15.0 Mrad | 55 | 63 | 70 | 48 | 61 | 100 |
| Oxygen Index (15 Mrad) | 30.0 | 30.0 | 30.0 | 30.5 | 30.0 | 30.0 |
| Change in Strength (%) during Immersion in Hot Water (100°C) | | | | | | |
| initial | 100 | 100 | 100 | 100 | 100 | 100 |
| 7 days | 79.1 | 94.0 | 67.2 | broken | broken | 43.6 |
| 14 days | 62.7 | 73.9 | 50.5 | broken | broken | 33.0 |

1) TAF: triacrylformal
2) TMPTM: trimethylolpropane trimethacrylate
3) TMPTA: trimethylolpropane triacrylate

    4)  TAIC:       triallyl isocyanurate

    5)  DBDP:       decabromodiphenyl ether


## TABLE 3

|  | Example | | | Comparative Example | | |
|---|---|---|---|---|---|---|
|  | 8 | 9 | 10 | G | H | I |
| horizontal burning time (s ) | 3 | 2 | 3 | 1 | 2 | 3 |

## Claims

1. A process for preparing a crosslinked molding of urethane resin composition comprising a thermoplastic urethane resin having incorporated therein a polyfunctional monomer selected from the group consisting of trimethylolpropane triacrylate, trimethylolpropane trimethacrylate and triacrylformal, characterized in that crosslinking is performed by radiation.

2. A process according to claim 1, characterized in that the polyfunctional monomer is present in an amount ranging from 0.1 to 50 parts per weight based on 100 parts per weight of the thermoplastic urethane resin.

3. A process according to claims 1-2, characterized in that the urethane resin composition further contains decabromodiphenyl ether and antimony trioxide.

4. A process according to claims 1-3, characterized in that the radiation is carried out with electron beams or gamma rays which have been given in a total dose of from 3 to 50 Mrad.

5. The use of a process according to one of the preceding claims for the preparation of an electric wire having a coating layer of the urethane resin composition formed over a conductor.

6. The use according to claim 5 characterized in that the conductor is composed of two or more insulated conductors which are twisted in a strand form.

## Revendications

1. Procédé de préparation d'une pièce moulée réticulée en une composition de résine en uréthane, comprenant une résine thermoplastique en uréthane contenant, incorporé, un monomère polyfonctionnel sélectionné dans le groupe constitué par le triacrylate de triméthylolpropane, le triméthacrylate de triméthylolpropane et le triacrylformal, caractérisé en ce que la réticulation est réalisée par irradiation.

2. Procédé selon la revendication 1, caractérisé en ce que le monomère polyfonctionnel est présent en une quantité comprise entre 0,1 et 50 parties en poids, pour 100 parties en poids de la résine thermoplastique en uréthane.

3. Procédé selon les revendications 1 et 2, caractérisé en ce que la composition de résine en uréthane contient en outre de l'éther décabromodiphénylique et du trioxyde d'antimoine.

4. Procédé selon les revendications 1 à 3, caractérisé en ce que l'irradiation est réalisée à l'aide de faisceaux électroniques ou de rayons gamma appliqués en une dose totale de 3 à 50 Mrad.

5. Emploi d'un procédé selon l'une des revendications précédente pour la préparation d'un fil électrique possédant une couche de revêtement en la composition de résine en uréthane, formée sur un conducteur.

6. Emploi selon la revendication 5, caractérisé en ce que le conducteur est composé de 2 ou plusieurs conducteurs isolés, torsadés sous la forme d'un cordon.

**Patentansprüche**

1. Verfahren zur Herstellung eines vernetzten Formteils aus einer Urethanharzmasse, umfassend ein thermoplastisches Urethanharz, in das ein polyfunktionelles Monomer, gewählt aus der Gruppe, bestehend aus Trimethylolpropantriacrylat, Trimethylolpropantrimethacrylat und Triacrylformal, eingearbeitet ist, dadurch gekennzeichnet, daß das Vernetzen durch Bestrahlung durchgeführt wird.

2. Verfahren nach Anspruch 1, dadurch gekennzeichnet, daß das polyfunktionelle Monomer in einer Menge von 0,1 bis 50 Gewichtsteilen, bezogen auf 100 Gewichtsteile thermoplastisches Urethanharz, vorliegt.

3. Verfahren nach Anspruch 1 oder 2, dadurch gekennzeichnet, daß die Urethanharzmasse weiterhin Decabromdiphenylether und Antimontrioxid enthält.

4. Verfahren nach einem der Ansprüche 1 bis 3, dadurch gekennzeichnet, daß die Bestrahlung mit Elektronenstrahlen oder Gammastrahlen durchgeführt wird, die in einer Gesamtdosis von 3 bis 50 Mrad verabreicht werden.

5. Verwendung eines Verfahrens nach einem der vorhergehenden Ansprüche zur Herstellung eines elektrischen Drahts mit einer Überzugsschicht aus der Urethanharzmasse, die über einem Leiter gebildet wird.

6. Verwendung nach Anspruch 5, dadurch gekennzeichnet, daß der Leiter aus zwei oder mehr isolierten Leitern, die miteinander in Strangform verdreht sind, zusammengesetzt ist.

FIG. 1